# EUROPÄISCHE PATENTSCHRIFT

(11) **EP 0 752 453 B1**
(45) Veröffentlichungstag und Bekanntmachung des Hinweises auf die Patenterteilung: **25.03.1998**
(21) Anmeldenummer: 96108740.0
(22) Anmeldetag: 31.05.1996
(51) Int. Cl.: C09D 5/08

(54) **Lackiertes Blechbauteil, insbesondere Fahrzeugkarosserie, mit einer korrosionsschützenden Haftschicht auf Basis von Polysäuren und Verfahren zum Aufbringen einer solchen Haftschicht**
Painted metal sheet part, particularly ear body covered with a corrosion-inhibiting dubbing layer based on polyacids and coating process
Elément de tôle laquée, en particulier carrosserie d'automobiles, avec une couche primaire inhibitrice de corrosion à base de polyacides et procédé d'application

(30) Priorität: 03.07.1995 DE 19524198
(43) Veröffentlichungstag der Anmeldung: 08.01.1997
(73) Patentinhaber: DAIMLER-BENZ AKTIENGESELLSCHAFT, 70567 Stuttgart (DE)
(72) Erfinder: Flammer, Ute, 71404 Korb (DE); Mezger, Fritz, Dr., 89079 Ulm (DE); Keller, Anja, 89134 Blaustein (DE); Funke, Werner, Prof. Dr., 71229 Leonberg (DE)

(56) Entgegenhaltungen:
- EP-A- 0 033 140
- EP-A- 0 093 985
- US-A- 4 362 770
- DATABASE WPI Week 9538 Derwent Publications Ltd., London, GB; AN 95-290628 XP002020271 & JP-A-07 188 608 (DAINIPPON TORYO) , 25.Juli 1995

## Beschreibung

Die Erfindung geht aus von einem lackierten Blechbauteil, insbesondere einer Fahrzeugkarosserie, mit einer Schicht einer korrosionsschützenden Haftschicht unter der Lackierung unmittelbar auf der Blechoberfläche nach dem Oberbegriff von Anspruch 1 und sie geht ferner aus von einem Verfahren zum Aufbringen einer solchen Haftschicht nach dem Oberbegriff von Anspruch 5.

Nachfolgend ist in diesem Zusammenhang stets von "korrosionsschützender" Schicht die Rede, wobei dies als Oberbegriff für eine die Korrosion verlangsamende und für eine die Korrosion verhindernde, also korrosionsinhibierende Wirkung verstanden sein soll.

Üblicherweise werden Karosserien vor dem Lackieren heute mit einer Phospatierungsschicht in einer Lagenstärke von etwa 2µm versehen. Anschließend wird die erste organische Schicht elektrophoretisch in einem Tauchlackierbad aufgebracht. Diese Art des Schichtaufbaues liefert eine gut haftende Lackierung und einen guten Korrosionsschutz aufgrund von Zusatzstoffen im KTL-Lack. Nachteilig daran ist jedoch, daß in den aufgrund der Phosphatierung anfallenden Abwässern ökologisch bedenkliche Nickelsalze und in den aufgrund der kataphoretischen Tauchlackierung anfallenden Abwässern ökologisch bedenkliche Bleisalze anfallen, die in aufwendiger Weise aus den Abwässern herausgeholt und in Form von Schlämmen aus Schwermetalloxiden als giftiger Sondermüll in kostspieliger Weise entsorgt werden müssen.

Aufgabe der Erfindung ist es, das in Anspruch 1 gattungsgemäß zugrundegelegte Blechbauteil bzw. das in Anspruch 5 gattungsgemäß zugrundegelegte Verfahren dahingehend zu verbessern, daß ohne Qualitätseinbußen bezüglich der Haftfestigkeit der Lackierung und der korrosionsschützenden Wirkung der korrosionsschützenden Haftschicht diese mit ökologisch geringeren Nachteilen bzw. Folgelasten aufgebracht werden kann.

Diese Aufgabe wird bei Zugrundelegung des gattungsgemäßen Blechbauteiles erfindungsgemäß durch die kennzeichnenden Merkmale von Anspruch 1 und bei Zugrundelegung des gattungsgemäßen Verfahrens durch die kennzeichnenden Merkmale von Anspruch 5 gelöst. Danach kommen Polysäuren zum Einsatz, die aus Homo- oder Copolymeren (Vinylverbindungen) von Carbonsäuren mit Doppelbindungen oder aus Homo- oder Copolymeren von Carbonsäuren und Carbonsäureestern mit funktionellen Gruppen, z.B. Hydroxygruppen bestehen, die auch blockiert sein können. Diese Polysäuren werden außerdem wahlweise mit Polymeren hoher Glastemperatur, z.B. über 100°C, wie beispielsweise Phenol-, Harnstoff- oder Epoxidharzen als schichtverdichtende Polymere oder mit niedermolekularen, wasserlöslichen Carbonsäuren - mit zwei bis dreißig Kohlenstoffatomen in der Kette - oder mit beidem kombiniert, wodurch die korrosionsschützende Wirkung auf ein sehr hohes Ergebnis gesteigert wird. Die Polysäureschicht wird durch Erhitzen immobilisiert, dabei wird die Schicht infolge einer Oxidation von Fe(II) zu Fe(III) in Wasser unlöslich.

Es wurde festgestellt, daß die korrosionsschützende Wirkung der erfindungsgemäß formulierten und applizierten Polysäuren im wesentlichen darauf zurückzuführen ist, daß die Naßhaftfestigkeit der Polysäureschicht besonders gut ist. Durch die Wirkung von funktionellen Gruppen kommt eine sehr innige Bindung der Polysäureschicht (Haftschicht) an der Metalloberfläche zustande, die eine gute Haftfestigkeit bei Einwirkung von Wasser und auch einen wirkungsvollen Korrosionsschutz herbeiführt. Die Naßhaftfestigkeit der Haftschicht ist u.a. sehr wesentlich ursächlich für die spätere korrosionsschützende Wirkung der Schicht. Die erfindungsgemäß aufgebrachte Polysäureschicht soll als Ersatz der bisher üblichen Phosphatierung und der kathodischen Tauchlackierung dienen und in der Funktion einer Haftschicht den notwendigen Korrosionsschutz gewährleisten.

Zwar ist es bekannt, daß Polysäuren - alleine oder als Copolymere mit Ester oder Aromaten - eine verbesserte Naßhaftfestigkeit von Lacken auf Metallen, z.B. Stahl oder Aluminium, ergeben (vgl. z.B. Z. Gao, H. Yamabe, B. Marold, W. Funke: "Verbesserung der Naßhaftfestigkeit organischer Beschichtungen auf Stahloberflächen" in 'farbe + lack' 98 (1992), Seiten 917 ff). Jedoch kann der geforderte, hohe Korrosionsschutz, wie er bisher bei Pkw-Lackierungen üblich und durch die Phosphatierschicht erreichbar ist, durch die Polysäuren allein nicht erreicht werden. Naßhaftfestigkeit und Korrosionsschutz laufen nämlich keinesfalls immer konform (vgl. z.B. R.A. Dickie: "Paint Adhesion, Corrosion Protection and Interfacial Chemistry" in 'Progress in Organic Coatings' 25 (1994) 3-22 oder X.H. Jin, K.R. Gowers, J. D. Scantlebury: "The Effect of Environmental Conditions on the Adhesion of Paint to Metals" in JOCCA 1988(3), Seite 78 ff). Weiterhin ist es bekannt, daß sich Polyacrylsäure anodisch abscheiden läßt. Dieses Wissen konnte den Fachmann jedoch nicht zu der erfindungsgemäßen, sowohl ökologisch als auch bezüglich des Korrosionsschutzes relevanten Verbesserung des dünnen Haftschichtauftrages veranlassen.

Die Vorteile der Erfindung liegen in Folgendem:
▷ Im Vergleich zu bisherigen Systemen mit Polysäuren kann mittels der erfindungsgemäßen Haftschicht ein wesentlich höherer Qualitätsstand bezüglich des Korrosionsschutzes erreicht werden.
▷ Bisher war ein so wirkungsvoller Korrosionsschutz nur mit einer gemeinsamen Anwendung sowohl einer Phosphatierung als auch einer kathodischen Tauchlackierung erreichbar.
▷ Die allein durch die erfindungsgemäße Haftschicht erreichbare hohe Korrosionsschutzwirkung läßt eine wesentliche Prozeßvereinfachung zu; unter Auslassung einer KTL-Grundierung kann in einer - eventuell elektrophoretisch unterstützt - Tauchapplikation anschließend gleich der Füllerlack aufgetragen werden.
▷ Durch eine - u.U. anodische - Abscheidung der Korrosionsschutzschicht wird ein sehr umweltfreundlicher Prozeß ohne Probleme einer Abwasserreinigung und/oder einer Schlammentsorgung gewährleistet. Zudem können Polysäuren in Salzform eingesetzt werden, wodurch in Wasser schwerlösliche Polysäuren eingesetzt werden können.
   Die elektrische Abscheidung hat weiterhin den Vorteil, daß die haftvermittelnden Säuregruppen der Polysäuren mehr zum Substrat hin orientiert werden und so mit der Metalloberfläche besser reagieren können.
▷ Die sehr guten Korrosionsschutzeigenschaften der Polysäure sind werkstoffunabhängig und erlauben eine Anwendung auch auf in Mischbauweise, d.h. aus Stahl und Leichtmetallen erstellten Karosserien; beim jetzigen Stand der Technik ist eine gleichzeitige Phosphatierung von Stahl und Aluminium nicht möglich, da Aluminium das Phosphatierbad vergiftet.

Die Haftschicht braucht lediglich etwa 10 bis 500 Nanometer, vorzugsweise 50-200nm stark zu sein. Bereits diese geringe Lagenstärke bietet eine sehr wirkungsvolle Verbesserung der Naßhaftfestigkeit und der Schutzwirkung; sie kann in einer relativ kurzen Applikationszeit aufgebracht und ebenfalls in einer sehr kurzen Zeit eingebrannt werden. In zweckmäßiger Ausgestaltung der das Blechbauteil betreffenden Erfindung kann ferner vorgesehen sein, daß auf die schützende Haftschicht als unterste Lacklage eine Füllerschicht aufgebracht ist, die vorteilhafterweise durch Tauchapplikation (stromlos oder kathodisch) aufgetragen wird.

Bezüglich des verfahrensmäßigen Aspektes der Erfindung besteht eine zweckmäßige Ausgestaltung darin, daß die Haftschicht durch Eintauchen der Karosserie in ein Bad aufgebracht werden kann, wobei ferner das Aufbringen auf die eingetauchte Karosserie elektrophoretisch bei positiv gepoltem Werkstück, also anodisch unterstützt wird. Durch den anodisch unterstützten Schicht-auftrag ergibt sich ein rascherer, ein geschlossenerer und ein orientierterer Schichtaufbau. Das Immobilisieren der schützenden Haftschicht erfolgt vorteilhafterweise durch Erhitzen auf 50 bis 200°C, vorzugsweise auf 100 bis 150°C. Ferner kann das Immobilisieren der Haftschicht zweckmäßigerweise durch Vernetzung mittels funktioneller Gruppen in den Polymeren, die nicht an die Blechoberfläche adsorbiert sind, ergänzt oder unterstützt werden, wodurch ein in sich sehr geschlossener Filmverbund innerhalb der Haftschicht und auch eine sehr gute Bindung zur folgenden Schicht entsteht. Die Vernetzung kann innerhalb der Haftschicht und/oder mit der nachfolgenden Lackschicht erfolgen. Man kann die Haftschicht vor dem oder zugleich mit dem Einbrennen der nachfolgenden Lackschicht vernetzen.

Die Erfindung ist grundsätzlich universell zum Korrosionsschutz von Metallen einsetzbar und simultan auch auf unterschiedlichen Metallen anwendbar, beispielsweise auf Stahl, Aluminium oder Magnesium. Die Polysäure kann sowohl durch anodische Abscheidung als auch durch stromloses Tauchen appliziert werden.

Nachfolgend wird noch von einem Beispiel berichtet:
Es wurden Prüfbleche (amerikanische Prüfbleche der Bezeichnung Q-Panel, in Deutschland vertrieben durch die Fa. Pausch) aus üblichem gewalztem Karosserie-Stahlblech (Werkstoffbezeichnung des Prüfbleches: RR-St 13) mit einer wässrigen Polyacrylsäurelösung vorbehandelt und diese anschließend mit einem Zweikomponenten- Polyurethan-Klarlack beschichtet. Mit diesen Prüfblechen wurde die Naßhaftfestigkeit der Deckbeschichtung sowie die Korrosionsbeständigkeit geprüft.

Zur Vorbehandlung wurde eine Polyacrylsäure mit einer molaren Masse von 450 000 g/mol verwendet. Daraus wurde eine wässrige Lösung gebildet, die 0,5 Gew.-% Polyacrylsäure enthält. Zur gleichmäßigeren Abscheidung der Polysäureschicht wurden 5 Vol.-% Ethanol, bezogen auf die Gesamtmenge zugesetzt und zur Bindung von Wasserstoff bei der anodischen Abscheidung, d.h. zur Bildung eines blasenfreien Niederschlages wurden noch 0,315 Gew.-% Hydroxylammoniumsulfat zugegeben. Zum Applizieren der Polysäureschicht wurde diese aus der wässrigen Lösung anodisch auf das Prüfblech mit einer Stromdichte von 0,66 mA/cm² bei einer Abscheidedauer von 3 Minuten abgeschieden. Anschließend wurde das Prüfblech 10 Minuten lang bei 200°C getrocknet. Der Lack wurde in üblicher Lagenstärke sprühappliziert und eingebrannt.

Die Naßhaftfestigkeit wurde mit dem Klebebandabrißtest (tape peel test) bestimmt. Dazu wird die Probe eine bestimmte Zeit lang in destilliertes Wasser bei Raumtemperatur gelegt, die Probe anschließend geritzt, oberflächlich mit einem Tuch abgetrocknet und ein selbstklebendes Prüf-Klebeband bestimmter Breite und mit definierter und reproduzierbarer Haftklebeeigenschaft symmetrisch zum Ritz aufgeklebt. Wenn sich beim Abziehen des Klebebandes mehr als 10%, bezogen auf die Klebebandfläche, der Beschichtung von dem Prüfblech lösen, so ist der Test - bei der stattgefundenen Wässerungszeit - beendet. Löst sich weniger von der Beschichtung ab, so wird um ein weiteres Zeitintervall gewässert und an einem neuen Riß ein weiterer Klebebandtest durchgeführt. Wässern und Klebebandtest an einem neuen Riß werden - unter Verwendung vorgegebener, zunehmender Zeitintervalle für das Wässern - so oft wiederholt, bis sich die Beschichtung erstmals im Rißbereich vom Prüfblech löst. Die Zeitintervalle für die kummulierte Wässerungszeit der Probe bis zum Eintritt einer Lackablösung, angegeben in Stunden, wird als Maßzahl für die Naßhaftfestigkeit verwendet. Die solcherart ermittelte Naßhaftfestigkeit der Beschichtung auf dem Prüfblech betrug 1300h (etwa 54 Tage). Bei unvorbehandelten und unter sonst vergleichbaren Bedingungen beschichteten Prüfblechen löste sich die Beschichtung bereits nach 2h Wässerung.

Zur Ermittlung der Korrosionsbeständigkeit wird die Lackschicht mittels eines Erichsen-Stichels mit einem Riß definierter Querschnittsform und 1 mm Breite versehen, der die Beschichtung bis auf den Grundwerkstoff des Prüfbleches durchdringt; anschließend wird das Prüfblech mit der so geschädigten Beschichtung mit dem VDA-Wechseltest (VDA = Verband der deutschen Automobilhersteller) bewettert. Ein Prüfzyklus des VDA-Wechseltests dauert eine Woche und setzt sich aus einem 24h-Salzsprühtest, einem 96h-Klimawechseltest und einer 48h-Lagerung bei Raumtemperatur und etwa 50% Raumfeuchtigkeit zusammen. Der 96h-Klimawechseltest seinerseits umfaßt vier Zyklen einer 8h-Trocknung und einer 16h-Lagerung bei 40°C und 90% Raumfeuchtigkeit. Es wird an mehreren Stellen die Breite der Unterwanderung der Beschichtung gemessen und daraus der Mittelwert gebildet. Die Unterwanderungstiefe der Beschichtung ist ein Maß für die Korrossionsbeständigkeit, wobei ggf. die Zahl der Prüfzyklen mit angegeben wird. Entscheidend hierbei ist, auf eine wie große Breite die Beschichtung vom Untergrund gelöst oder gelockert ist. Mit der o.g. Beschichtung konnte eine Unterwanderung nach sieben Bewetterungszyklen von 15 bis 20 mm festgestellt werden. Zum Vergleich: Bei unvorbehandelten und unter sonst vergleichbaren Bedingungen beschichteten Prüfblechen betrug die Rostunterwanderung nach nur einem Bewetterungszyklus bereits 50 bis 60 mm.

## Patentansprüche

1. Lackiertes Blechbauteil, insbesondere Fahrzeugkarosserie, mit einer schützenden Haftschicht gegen Korrosion unter der Lackierung unmittelbar auf der Blechoberfläche,
**dadurch gekennzeichnet**,
daß die Haftschicht aus Polysäuren mit mindestens hundert COOH-Gruppen pro Polymermolekül gebildet ist, wobei die Polysäuren bestehen aus
▷ Homo- oder Copolymeren von Doppelbindungen enthaltenden Carbonsäuren und/oder
▷ Copolymeren von Carbonsäuren mit Vinylverbindungen und/oder
▷ Homo- oder Copolymeren von funktionelle Gruppen von Carbonsäureester enthaltenden Carbonsäuren,
wobei ferner die verwendeten Polysäuren kombiniert sind
▷ mit Polymeren mit einer Glastemperatur über 100°C und/oder
▷ mit niedermolekularen Carbonsäuren mit zwei bis dreißig Kohlenstoffatomen in der Kohlenstoffkette.

2. Blechbauteil nach Anspruch 1,
**dadurch gekennzeichnet**,
daß die Korrosionsschutzschicht 10 bis 500 Nanometer, vorzugsweise 50 bis 200 Nanometer stark ist.

3. Blechbauteil nach Anspruch 1,
**dadurch gekennzeichnet**,
daß die auf die Korrosionsschutzschicht aufgebrachte erste Lage der Lackierung eine Füllerschicht ist.

4. Blechbauteil nach Anspruch 1,
**dadurch gekennzeichnet,**
daß die Polysäuren mit Phenol-, Harnstoff- oder Epoxidharzen kombiniert sind.

5. Verfahren zum Aufbringen einer Schicht einer schützenden Haftschicht auf ein Blechbauteil, insbesondere auf eine Fahrzeugkarosserie vor deren Lackieren, bei dem das Blechbauteil gereinigt und entfettet wird und bei dem anschließend eine Haftschicht auf der Oberfläche des Blechbauteils niedergeschlagen und dieser Belag anschließend auf der Blechoberfläche stabilisiert wird,
**gekennzeichnet durch** die Gemeinsamkeit folgender Merkmale:
▷ als haftvermittelndes Polymer werden Polysäuren mit mindestens hundert COOH-Gruppen pro Polymermolekül verwendet, wobei die Polysäuren bestehen aus Homo- oder Copolymeren von Doppelbindungen enthaltenden Carbonsäuren und/oder aus Copolymeren von Carbonsäuren mit Vinylverbindungen und/oder aus Homo- oder Copolymeren von Carbonsäuren mit funktionellen Carbonsäureestern,
▷ dabei ist/sind die verwendete(n) Polysäure(n) kombiniert mit Polymeren einer Glastemperatur über 100°C und/oder mit niedermolekularen Carbonsäuren mit zwei bis dreißig Kohlenstoffatomen in der Kohlenstoffkette,
▷ die haftvermittelde Schicht wird aus einer wäßrigen Lösungen von Polysäuren bei einer Konzentration von 0,1 bis 5,0 Gew.-%, vorzugsweise 0,2 bis 2,0 Gew.-% gebildet,
▷ das Stabilisieren der schützenden Haftschicht erfolgt in Form des Immobilisierens durch Erhitzen.

6. Verfahren nach Anspruch 5,
**dadurch gekennzeichnet**,
daß die Polysäure(n) der Haftschicht mittels funktioneller Gruppen, die nicht an das Substrat adsorbiert sind, inter- oder intramolekular oder zur nächsten Lackschicht vernetzt werden.

7. Verfahren nach Anspruch 5,
**dadurch gekennzeichnet**,
daß die Polysäuren mit Phenol-, Harnstoff- oder Epoxidharzen kombiniert werden.

8. Verfahren nach Anspruch 5,
**dadurch gekennzeichnet**,
daß das Immobilisieren der Haftschicht durch Erhitzen bei 50 bis 200°C, vorzugsweise 100 bis 150°C erfolgt.

9. Verfahren nach Anspruch 5,
**dadurch gekennzeichnet**,
daß das Aufbringen der Haftschicht durch Eintauchen der Karosserie in ein Bad erfolgt.

10. Verfahren nach Anspruch 9,
**dadurch gekennzeichnet**,
daß das Aufbringen der Haftschicht auf die in das Bad eingetauchte Karosserie elektrophoretisch, vorzugsweise anodisch unterstützt wird.

## Claims

1. Coated sheet metal component, in particular vehicle bodywork, having a protective anticorrosion adhesion-promoting layer under the coating immediately on the sheet metal surface, characterized in that the adhesion-promoting layer is formed from polyacids having at least a hundred COOH groups per polymer molecule, the polyacids consisting of
▷ homo- or copolymers of carboxylic acids containing double bonds and/or
▷ copolymers of carboxylic acids with vinyl compounds and/or
▷ homo- or copolymers of carboxylic acids containing functional groups of carboxylic esters,
and furthermore the polyacids used being combined
▷ with polymers having a glass transition temperature above 100°C and/or
▷ with low molecular weight carboxylic acids having two to thirty carbon atoms in the carbon chain.

2. Sheet metal component according to Claim 1, characterized in that the corrosion protection layer is 10 to 500 nanometres, preferably 50 to 200 nanometres, thick.

3. Sheet metal component according to Claim 1, characterized in that the first coating layer applied to the corrosion protection layer is a filler layer.

4. Sheet metal component according to Claim 1, characterized in that the polyacids are combined with phenol resins, urea resins or epoxy resins.

5. Process for applying a protective adhesion-promoting layer to a sheet metal component, in particular to vehicle bodywork before the latter is coated, in which the sheet metal component is cleaned and degreased and in which an adhesion-promoting layer is then deposited on the surface of the sheet metal component and this coating is then stabilized on the sheet metal surface, characterized by the totality of the following features:
▷ the adhesion-promoting polymers used are polyacids having at least a hundred COOH groups per polymer molecule, the polyacids consisting of homo- or copolymers of carboxylic acids containing double bonds and/or of copolymers of carboxylic acids with vinyl compounds and/or of homo- or copolymers of carboxylic acids with functional carboxylic esters,
▷ the polyacid or acids used is or are combined with polymers having a glass transition temperature above 100°C and/or with low molecular weight carboxylic acids having two to thirty carbon atoms in the carbon chain,
▷ the adhesion-promoting layer is formed from an aqueous solution of polyacids at a concentration of 0.1 to 5.0% by weight, preferably 0.2 to 2.0% by weight,
▷ the stabilization of the protective adhesion-promoting layer is effected in the form of immobilization by heating.

6. Process according to Claim 5, characterized in that the polyacid or acids of the adhesion-promoting layer is or are crosslinked intermolecularly or intramolecularly or to the next coat by means of functional groups which are not adsorbed onto the substrate.

7. Process according to Claim 5, characterized in that the polyacids are combined with phenol resins, urea resins or epoxy resins.

8. Process according to Claim 5, characterized in that the immobilization of the adhesion-promoting layer is effected by heating at 50 to 200°C, preferably 100 to 150°C.

9. Process according to Claim 5, characterized in that the application of the adhesion-promoting layer is effected by dipping the bodywork into a bath.

10. Process according to Claim 9, characterized in that the application of the adhesion-promoting layer to the bodywork dipped into the bath is electrophoretically, preferably anodically, assisted.

## Revendications

1. Elément tôlé peint, notamment une carrosserie d'automobile, avec une couche primaire de protection contre la corrosion appliquée sous la peinture, directement sur la surface de la tôle,
caractérisé
en ce que la couche primaire est constituée de polyacides se composant au moins de cent groupes de COOH par molécule de polymère, où les polyacides se composent :
- d'homopolymères ou de copolymères d'acides carboxyliques contenant des liaisons doubles, et/ou
- de copolymères d'acides carboxyliques avec des liaisons de vinyle, et/ou
- d'homopolymères ou de copolymères d'acides carboxyliques contenant des groupes fonctionnels d'ester d'acide carboxylique,
où les polyacides utilisés sont en outre combinés :
- avec des polymères à une température de vitrification supérieure à 100°C et/ou
- avec des acides carboxyliques de faible poids moléculaire avec deux à trente atomes de carbone de la chaîne du carbone.

2. Elément tôlé selon la revendication 1, caractérisé en ce que la couche de protection contre la corrosion mesure entre 10 et 500 nanomètres, de préférence entre 50 et 200 nanomètres.

3. Elément tôlé selon la revendication 1, caractérisé en ce que la première couche de peinture appliquée sur la couche de protection contre la corrosion est une couche de remplissage.

4. Elément tôlé selon la revendication 1, caractérisé en ce que les polyacides sont combinés avec des résines phénoliques, d'urée ou d'époxy.

5. Procédé d'application d'une couche primaire de protection sur un élément tôlé, notamment sur une carrosserie d'automobile avant d'être peinte, au cours duquel l'élément tôlé est nettoyé et dégraissé et au cours duquel une couche primaire est déposée ensuite sur la surface de l'élément tôlé, ladite couche étant ensuite stabilisée sur la surface de la tôle,
caractérisé par le caractère commun des caractéristiques suivantes :
- comme polymère d'accrochage, on utilise des polyacides se composant au moins de cent groupes de COOH par molécule de polymère, où les polyacides se composent d'homopolymères ou de copolymères d'acides carboxyliques contenant des liaisons doubles et/ou se composant de copolymères d'acides carboxyliques ayant des liaisons de vinyle et/ou d'homopolymères ou de copolymères d'acides carboxyliques avec des esters fonctionnels d'acides carboxyliques,
- procédé au cours duquel le ou les polyacides utilisés sont combinés avec des polymères à une température de vitrification supérieure à 100°C et/ou avec des acides carboxyliques de faible poids moléculaire avec deux à trente atomes de carbone de la chaîne du carbone,
- la couche primaire d'accrochage est composée d'une solution aqueuse de polyacides suivant une concentration comprise entre 0,1 et 5,0 % en poids, de préférence entre 0,2 et 2,0 % en poids,
- la stabilisation de la couche primaire de protection a lieu sous la forme d'une immobilisation par chauffage.

6. Procédé selon la revendication 5, caractérisé en ce que le ou les polyacides de la couche primaire sont réticulés de façon intermoléculaire ou intramoléculaire ou au niveau de la couche de peinture suivante, au moyen de groupes fonctionnels qui ne sont pas adsorbés sur le substrat.

7. Procédé selon la revendication 5, caractérisé en ce que les polyacides sont combinés avec des résines phénoliques, d'urée ou d'époxy.

8. Procédé selon la revendication 5, caractérisé en ce que l'immobilisation de la couche primaire a lieu en chauffant entre 50 et 200°C, de préférence entre 100 et 150°C.

9. Procédé selon la revendication 5, caractérisé en ce que l'application de la couche primaire a lieu par immersion de la carrosserie dans un bain.

10. Procédé selon la revendication 9, caractérisé en ce que l'application de la couche primaire sur la carrosserie immergée dans un bain a lieu par électrophorèse, de préférence par anodisation.
